# EUROPEAN PATENT SPECIFICATION

(11) **EP 1 077 582 B1**
(45) Date of publication and mention of the grant of the patent: **28.11.2007**
(21) Application number: 99402029.5
(22) Date of filing: 10.08.1999
(51) Int. Cl.: H04Q 7/38

(54) **Method to reduce interference between mobiles using different duplex technology**
Verfahren zur Verringerung der Interferenz zwischen Mobiltelefonen die unterschiedliche Duplextechnik benutzen
Méthode pour réduire l'interférence entre mobiles qui utilisent une technique duplex différente

(43) Date of publication of application: 21.02.2001
(73) Proprietor: MOTOROLA, INC., Schaumburg, IL 60196 (US)
(72) Inventor: Faure, Cecile, 75005 Paris (FR); Boscovic, Dragan, 78100 St. Germain en Laye (FR); Benamar, Abdelkrim, 77177 Brou sur Chatereine (FR)
(74) Representative: Cross, Rupert Edward Blount

(56) References cited:
- EP-A- 0 492 800
- WO-A-96/38997
- WO-A-98/48585

## Description

### Field of the Invention

This invention relates to radio communications systems and more particularly to the reduction of interference in mobile radio communication; systems.

### Background of the Invention

Cellular radio communication systems are well known. Such systems are, typically, comprised of a number of cells, each having a base station with a service coverage area, and a number of cellular telephones (communications units, also sometimes referred to as mobile stations or MSs). The service coverage areas of adjacent cells are typically arranged to partially overlap in such a manner as to provide a substantially continuous coverage area in which a communications unit receiving service from one cell may be handed off to an adjacent cell with no interruption in service. The DECT European digital cellular system is an example of such a system.

The DECT system is a Time Division Multiple Access Time Division Duplex (TDM/TDD) system. In the DECT system the same frequency is used both for uplink (MS to base station) and downlink (base station to MS) communications in any one call, with each frequency being divided into time frames to facilitate duplex (both directions) communications.

In such radio communication systems, there is the potential for communications between adjacent frequencies, adjacent cells and in some cases adjacent time periods, to interfere with one another, thereby reducing the quality of the communication link. Since adjacent cell sites operate on different frequencies, and since the present sites are time multiplexed for those mobile stations operating at the same frequency, the possibility of interference between mobile stations is reduced.

Other cellular systems are Frequency Division Duplex systems where, instead of the transmissions being separated by time they are separated by frequency. In such systems interference issues between two geographically close mobile stations using FDD duplex mode are well known and have been addressed by the radio communications industry.

Two US patents dealing with handover between different systems have been identified and the following summarises their content:
US Patent no 5737703: 'Multi Mode Radio Telephone which Executes Handover Between Different Systems'. This Patent deals with a radio telephone capable of operating in more than one system, and so, comprising communications and control means associated with each of the radio systems. The call may be handed over from one system to another having the highest signal quality of the lowest cost. The handover is carried out by continuing the communication with initial network until communication with the second one is completely established. Moreover, audible effects due to potential vocoders differences are inhibited by an appropriate filtering.
   US Patent no 5659598: 'Dual Mode Subscriber Terminal and a Handover Procedure of the Dual Mode Subscriber Terminal in a Mobile Telecommunication Network'. This patent deals with the more precise situation of a dual mode mobile capable to operate both in a cordless telephone system and in a radio cellular system. It presents in particular a method for performing handover between systems with network-initiated handover and mobile-initiated handover. However, it should be noted that these patents do not address compatibility issues between two geographically close mobile stations operating with two different duplex technologies on the same system and possibly with the same base station.

PCT patent application no. WO 98/48585 describes a mobile communication system having multimode terminals which monitor the quality of signals from GSM and DECT base stations and request a handover to another base station, whether GSM or DECT, in order to achieve the best signal quality.

Future systems, however, for example the proposed UMTS system in Europe will use both FDD and TDD duplexing technologies. New interference scenarios will arise and must be addressed, such as those where mobile stations (MSs) operating with different duplexing schemes are geographically close to each other.

### Summary of the Invention

In accordance with a first aspect of the present invention there is provided a method for reducing interference between a first mobile station operating in time division duplex mode and a second mobile station operating in frequency division duplex mode as recited in claim 1 of the accompanying claims.

In accordance with a second aspect of the present invention there is provided a communication system as recited in claim 4 of the accompanying claims.

In accordance with a third aspect of the present invention there is provided a mobile station as recited in claim 7 of the accompanying claims.

In this manner, the risk of interference during handover between TDD and FDD modes is reduced.

### Brief Description of the Drawings

FIG. 1 is a representation of an interference situation in which a mobile station operating in Time Division Duplex mode is interfered with by a mobile station operating in Frequency Division Duplex mode.
FIG. 2 shows an algorithm suitable for resolving the interference scenario of FIG. 1.
FIG. 3 is a representation of another interference situation in which an MS operating in Frequency Division Duplex mode is interfered with by and MS operating in Time Division Duplex mode.
FIG. 4 shows an algorithm suitable for resolving the interference scenario of FIG. 3.

### Description of a Preferred Embodiment

In a system such as that described, in which both TDD and FDD duplexing modes are used, it is assumed the mobile stations (MSs) generally will have the ability to operate alternatively in both modes. Two different interference scenarios involving one MS as a victim of another MS using a different duplex method are: a TDD MS interfered with by an FDD MS; or an FDD MS interfered with by a TDD MS. (Obviously, while the following is described in terms of two mobile stations, one station could be fixed or relatively fixed, with the MS approaching to cause the interfering activity.) A solution to each of these interference scenarios follows.

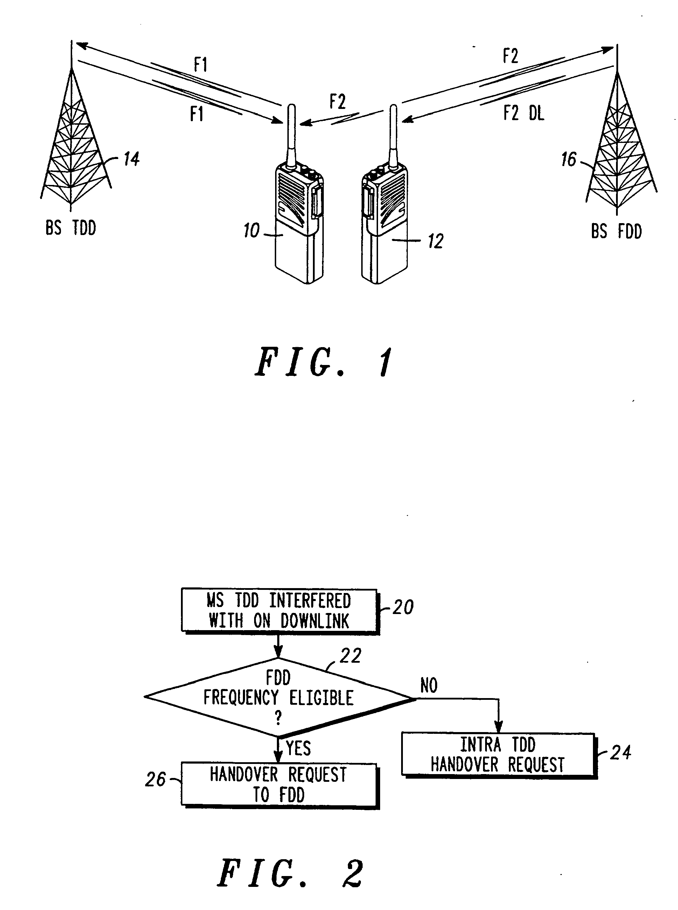

FIG. 1 is a representation of an interference situation in which a mobile station operating in Time Division Duplex mode is interfered with by a mobile station operating in Frequency Division Duplex mode.

The TDD MS 10 receives on frequency f1 and the FDD MS 12 transmits at frequency f2, which interferes with the TDD MS 10. For clarity, FIG. 1 shows two base stations, one base station 14 operating in TDD mode and the other base station 16 operating in FDD mode. It should be noted that the same approach applies in the case where there is one base station operating in both TDD and FDD modes.

The solution to this interference problem is to require the TDD MS 10 to handover to the FDD system, leading to the known interference scenario involving two FDD MSs. If the two MSs 10 and 12 belong to the same network, the victim MS 10 can make an attempt to access the same cell as its interferer. If they belong to different networks, the TDD MS 10 will search in priority another FDD candidate cell instead of trying another TDD cell.

FIG.2 shows an algorithm suitable for resolving the interference scenario of FIG. 1. The TDD MS 10 is interfered with on the downlink at 20. The interfered-with MS 10 scans the eligible FDD frequencies at 22 (eligible in this case meaning those frequencies which otherwise meet the criteria for handover set by the system such as signal quality, signal strength, etc.). The network or the MS, or both, will determine whether the MS 10 can handover to an FDD cell.

If a handover is not possible an intra TDD handover is requested at 24. If a handover to the FDD mode is possible, a handover request is made to the FDD mode at 26.

FIG. 3 is a representation of another interference situation in which an MS 30 operating in Frequency Division Duplex mode is interfered with by an MS 32 operating in Time Division Duplex mode. The FDD MS 30 receives on frequency f2. The TDD MS 32 transmits at frequency f1. Once again, for clarity two base stations are shown, but the same approach applies in the case where one base station operates in both FDD and TDD modes.

The solution to this interference problem is to require the TDD MS 32 to determine whether it is receiving an FDD uplink frequency at a level indicating that an FDD mobile is transmitting in its vicinity. In that case the TDD MS 32 is potentially interfering with the FDD MS 30 and the TDD MS 32 searches for an FDD cell to make a handover attempt, leading again to the known interference scenario between two FDD MSs. This handover will limit the risk of interference to other mobiles as well, since other TDD mobiles may be operating on the same or nearby TDD cells.

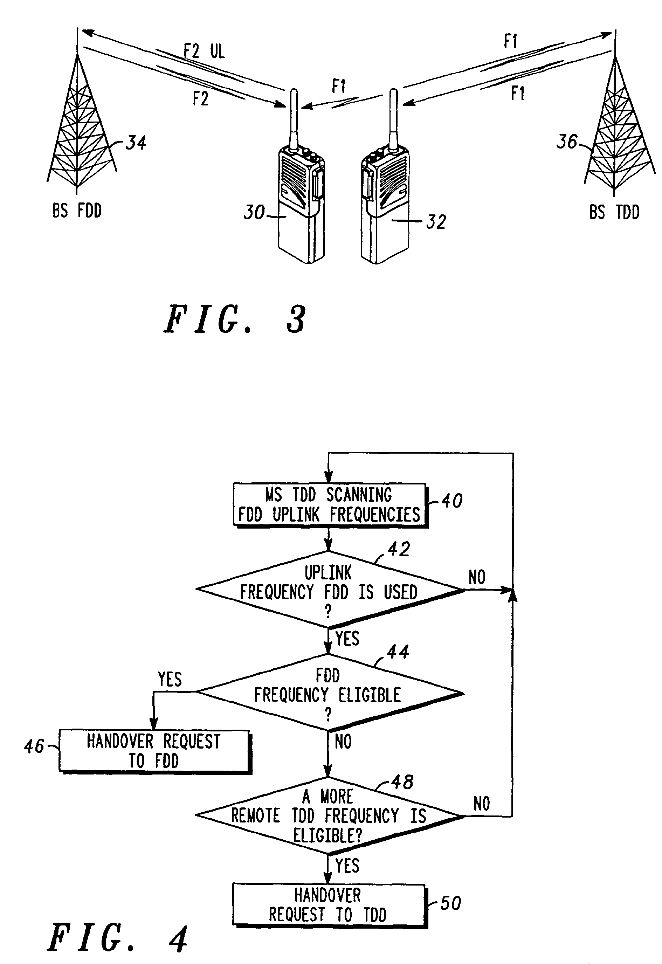

FIG. 4 shows an algorithm suitable for resolving the interference scenario of FIG. 3. The TDD MS 32 scans the FDD uplink frequencies at 40. If an uplink frequency is being used at 42, the potential for interference exists and the TDD Ms scans the eligible FDD frequencies at 44 to determine whether a handover to an FDD cell is possible. If a handover to an FDD cell is possible, the handover is requested at 46.

If a handover to an FDD cell is not possible, the TDD MS 32 scans the list of eligible TDD frequencies at 48 as provided by the base station 36. If a frequency more remote to the potentially-interfered-with FDD frequency is found a handover request is made at 50. If a handover cannot be made the uplink scanning sequence 40 is begun again.

It is within the contemplation of the invention that other dual-mode communications systems could benefit from the inventive concept described hereinbefore, for example, if one or both modes of operation were time and frequency divided as occurs in Code Division Multiple Access (CDMA) systems.

Thus in both interference scenarios the TDD MS is required to take action to avoid or mitigate the interference. This is so since the potential for interference between two TDD MSs is remote, as they are temporally separated, ar.d because the solution to FDD-FDD interference is known.

Hence, a method of operating a communications system employing both time divided and frequency divided channels and operating modes is provided such that handover between the two operating modes reduces interference in the communications system. Furthermore, the operation of both communications units and communications infrastructure have been described, detailing such a handover technique.

## Claims

1. A method for reducing interference between a first mobile station (10) operating in time division duplex mode and a second mobile station (12) operating in frequency division duplex mode, the method **characterized by** the steps of:
identifying, by the first mobile station (10), interference between the first mobile station (10) and the second mobile station (12);
scanning (44), in response to identifying interference, by the first mobile station, available frequency division duplex frequencies for a handover to a frequency division duplex system, and
initiating (46) if a frequency division duplex frequency is available, a handover to the frequency division duplex system.

2. A method as set forth in claim 1 wherein:
if no frequency division duplex frequency is available, scanning (48) time division duplex frequencies more remote from the interfered with frequency division duplex frequency; and
if a more remote time division duplex frequency is available, initiating a handover to the more remote time division duplex system.

3. A method according to claim 1 or 2, wherein the first mobile station identifies interference when the second mobile station is interfering with the first mobile station or when the first mobile station is interfering with the second mobile station.

4. A communication system providing communication channels and comprising a plurality of mobile stations communicating on the communication channels in at least two operating modes including a first time division duplex operating mode and a second frequency division duplex operating mode, the communication system being **characterized in that**:
a first mobile station (10) operating in the first operating mode is capable of identifying interference between the first mobile station (10) and a second mobile station (12) operating in the second operating mode and in response, scanning the second operating mode for available frequency division duplex frequencies for a handover to the second operating mode and initiating a handover to the second operating mode if a frequency division duplex frequency is available.

5. A communication system according to claim 4, wherein:
if no frequency division duplex frequency is available, the first mobile station (10) is arranged to scan (48) time division duplex frequencies more remote from the interfered with frequency division duplex frequency; and
if a more remote time division duplex frequency is available, the first mobile station is arranged to initiate a handover to the more remote time division duplex system.

6. A communication system according to claim 4 or 5, wherein the first mobile station identifies interference when the second mobile station is interfering with the first mobile station or when the first mobile station is interfering with the second mobile station.

7. A mobile station (10, 12) capable of operating in both a time division duplex mode and a frequency division duplex mode, the mobile station being **characterized by**:
means for identifying interference between the mobile station (10) when operating in a time division duplex mode and another mobile station (12) operating in a frequency division duplex mode;
scanning means for scanning available frequency division duplex frequencies for a handover to a frequency division duplex system when interference has been identified; and
initiating means to initiate handover to the frequency division duplex system if a frequency division duplex frequency is available.

8. A mobile station according to claim 7, wherein:
if no frequency division duplex frequency is available, the mobile station (10) is arranged to scan (48) time division duplex frequencies more remote from the interfered with frequency division duplex frequency; and
if a more remote time division duplex frequency is available, the mobile station is arranged to initiate a handover to the more remote time division duplex system.

9. A mobile station according to claim 7 or 8, wherein the mobile station identifies interference when the other mobile station is interfering with the mobile station or when the mobile station is interfering with the other mobile station.

## Patentansprüche

1. Verfahren zur Verringerung der Interferenz zwischen einer ersten Mobilstation (10), die im Zeitduplexbetrieb arbeitet, und einer zweiten Mobilstation (12), die im Frequenzduplexbetrieb arbeitet, wobei das Verfahren durch die folgenden Schritte **gekennzeichnet** ist:
Erkennen, durch die erste Mobilstation (10), der Interferenz zwischen der ersten Mobilstation.(10) und der zweiten Mobilstation (12);
Scannen bzw. Abtasten (44), ansprechend auf das Erkennen der Interferenz, durch die erste Mobilstation, von verfügbaren Frequenzduplexfrequenzen für eine Übergabe bzw. ein Handover zu einem Frequenzduplexsystem, und
Initiieren (46) einer Übergabe bzw. eines Handovers zu dem Frequenzduplexsystem, falls eine Frequenzduplexfrequenz verfügbar ist.

2. Verfahren nach Anspruch 1, **gekennzeichnet durch** die folgenden Schritte:
wenn keine Frequenzduplexfrequenz verfügbar ist, Scannen (48) von Zeitduplexfrequenzen, die weiter entfernt von denen von der Frequenzduplexfrequenz gestörten sind; und
wenn eine weiter entfernte Zeitduplexfrequenz verfügbar ist, Initiieren einer Übergabe bzw. eines Handovers zu dem weiter entfernten Zeitduplexsystem.

3. Verfahren nach einem der Ansprüche 1 oder 2, **dadurch gekennzeichnet, dass** die erste Mobilstation die Interferenz erkennt, wenn die zweite Mobilstation von der ersten Mobilstation gestört wird oder wenn die erste Mobilstation von der zweiten Mobilstation gestört wird.

4. Kommunikationssystem, welches Kommunikationskanäle bereitstellt und eine Vielzahl von Mobilstationen aufweist, die auf den Kommunikationskanälen in mindestens zwei Betriebsmodi einschließlich eines ersten Zeitduplexbetriebsmodus und eines zweiten Frequenzduplexbetriebsmodus kommunizieren, wobei das Kommunikationssystem **dadurch gekennzeichnet ist, dass**:
eine erste Mobilstation (10), die in dem ersten Betriebsmodus arbeitet, in der Lage ist, die Interferenz zwischen der ersten Mobilstation (10) und einer zweiten Mobilstation (12), die in dem zweiten Betriebsmodus arbeitet, zu erkennen, und ansprechend darauf den zweiten Betriebsmodus nach verfügbaren Frequenzduplexfrequenzen für eine Übergabe bzw. ein Handover zu dem zweiten Betriebsmodus scannt und eine Übergabe bzw. ein Handover zu dem zweiten Betriebsmodus initiiert, wenn eine Frequenzduplexfrequenz verfügbar ist.

5. Kommunikationssystem nach Anspruch 4, **dadurch gekennzeichnet, dass**:
wenn keine Frequenzduplexfrequenz verfügbar ist, die erste Mobilstation (10) so angeordnet ist, dass sie Zeitduplexfrequenzen scannt (48), die weiter entfernt von denen von der Frequenzduplexfrequenz gestörten sind; und dass
wenn eine weiter entfernte Zeitduplexfrequenz verfügbar ist, die erste Mobilstation so angeordnet ist, dass sie eine Übergabe bzw. ein Handover zu dem weiter entfernten Zeitduplexsystem initiiert.

6. Kommunikationssystem nach einem der Ansprüche 4 oder 5, **dadurch gekennzeichnet, dass** die erste Mobilstation die Interferenz erkennt, wenn die zweite Mobilstation von der ersten Mobilstation gestört wird oder wenn die erste Mobilstation von der zweiten Mobilstation gestört wird.

7. Mobilstation (10, 12), die in der Lage ist, sowohl in einem Zeitduplexmodus als auch einem Frequenzduplexmodus zu arbeiten, wobei die Mobilstation durch Folgendes **gekennzeichnet** ist:
Vorrichtung zum Erkennen der Interferenz zwischen der Mobilstation (10), wenn sie in einem Zeitduplexmodus arbeitet, und einer weiteren Mobilstation (12), die in einem Frequenzduplexmodus arbeitet;
Scannvorrichtung zum Scannen verfügbarer Frequenzduplexfrequenzen für eine Übergabe bzw. ein Handover zu einem Frequenzduplexsystem, wenn die Interferenz erkannt wurde; und
Initiierungsvorrichtung zum Initiieren einer Übergabe bzw. eines Handovers zu dem Frequenzduplexsystem, wenn eine Frequenzduplexfrequenz verfügbar ist.

8. Mobilstation nach Anspruch 7, **dadurch gekennzeichnet, dass**:
wenn keine Frequenzduplexfrequenz verfügbar ist, die Mobilstation (10) so angeordnet wird, dass sie Zeitduplexfrequenzen scannt, die weiter entfernt von denen von der Frequenzduplexfrequenz gestörten sind; und
wenn eine weiter entfernte Zeitduplexfrequenz verfügbar ist, die Mobilstation so angeordnet ist, dass sie eine Übergabe bzw. ein Handover zu dem weiter entfernten Zeitduplexsystem initiiert.

9. Mobilstation nach einem der Ansprüche 7 oder 8, **dadurch gekennzeichnet, dass** die Mobilstation die Interferenz erkennt, wenn die andere Mobilstation die Mobilstation stört oder wenn die Mobilstation die andere Mobilstation stört.

## Revendications

1. Procédé en vue de réduire l'interférence entre une première station mobile (10) fonctionnant en mode de duplexage par répartition dans le temps et une seconde station mobile (12) fonctionnant en mode de duplexage par répartition en fréquence, le procédé étant **caractérisé par** les étapes consistant à :
identifier, au moyen de la première station mobile (10), une interférence entre la première station mobile (10) et la seconde station mobile (12) ;
balayer (44), en réponse à l'identification d'interférence, au moyen de la première station mobile, les fréquences disponibles de duplexage par répartition en fréquence en vue d'un transfert à un système de duplexage par répartition en fréquence, et
initier (46) lorsqu'une fréquence de duplexage par répartition en fréquence est disponible, un transfert au système de duplexage par répartition en fréquence.

2. Procédé selon la revendication 1 dans lequel :
lorsqu'aucune fréquence de duplexage par répartition en fréquence n'est disponible, balayer (48) des fréquences de duplexage par répartition dans le temps plus éloignées de la partie brouillée avec la fréquence de duplexage par répartition en fréquence ; et
lorsqu'une fréquence de duplexage par répartition dans le temps plus éloignée est disponible, initier un transfert au système de duplexage par répartition dans le temps plus éloigné.

3. Procédé selon la revendication 1 ou 2, dans lequel la première station mobile identifie une interférence lorsque la seconde station mobile interfère avec la première station mobile ou lorsque la première station mobile interfère avec la seconde station mobile.

4. Système de communication fournissant des canaux de communication et comportant une pluralité de stations mobiles communiquant sur les canaux de communication sur au moins deux modes de fonctionnement comprenant un premier mode de fonctionnement de duplexage par répartition dans le temps et un second mode de fonctionnement de duplexage par répartition en fréquence, le système de communication étant **caractérisé en ce que** :
une première station mobile (10) fonctionnant sur le premier mode de fonctionnement est en mesure d'identifier une interférence entre la première station mobile (10) et une seconde station mobile (12) fonctionnant sur le second mode de fonctionnement et en réponse, de balayer le second mode de fonctionnement à la recherche de fréquences de duplexage par répartition en fréquence disponibles pour un transfert au second mode de fonctionnement et d'initier un transfert au second mode de fonctionnement lorsqu'une fréquence de duplexage par répartition en fréquence est disponible.

5. Système de communication selon la revendication 4, dans lequel :
lorsqu'aucune fréquence de duplexage par répartition en fréquence n'est disponible, la première station mobile (10) est agencée en vue de balayer (48) des fréquences de duplexage par répartition dans le temps plus éloignées de la partie brouillée avec la fréquence de duplexage par répartition en fréquence ; et
lorsqu'une fréquence de duplexage par répartition dans le temps plus éloignée est disponible, la première station mobile est agencée en vue d'initier un transfert au système de duplexage par répartition dans le temps plus éloigné.

6. Système de communication selon la revendication 4 ou 5, dans lequel la première station mobile identifie une interférence lorsque la seconde station mobile interfère avec la première station mobile ou lorsque la première station mobile interfère avec la seconde station mobile.

7. Station mobile (10, 12) en mesure de fonctionner sur un mode de duplexage par répartition dans le temps et sur un mode de duplexage par répartition en fréquence, la station mobile étant **caractérisée par** :
des moyens en vue d'identifier une interférence entre la station mobile (10) fonctionnant en mode de duplexage par répartition dans le temps et une autre station mobile (12) fonctionnant en mode de duplexage par répartition en fréquence ;
des moyens de balayage en vue de balayer des fréquences de duplexage par répartition en fréquence disponibles pour un transfert à un système de duplexage par répartition en fréquence lorsque une interférence a été identifiée ; et
des moyens d'initiation en vue d'initier un transfert au système de duplexage par répartition en fréquence lorsqu'une fréquence de duplexage par répartition en fréquence est disponible.

8. Station mobile selon la revendication 7, dans laquelle :
lorsqu'aucune fréquence de duplexage par répartition en fréquence n'est disponible, la station mobile (10) est agencée en vue de balayer (48) des fréquences de duplexage par répartition dans le temps plus éloignées de la partie brouillée avec la fréquence de duplexage par répartition en fréquence ; et
lorsqu'une fréquence de duplexage par répartition dans le temps plus éloignée est disponible, la station mobile est agencée en vue d'initier un transfert au système de duplexage par répartition dans le temps plus éloigné.

9. Station mobile selon la revendication 7 ou 8, dans laquelle la station mobile identifie une interférence lorsque l'autre station mobile interfère avec la station mobile ou lorsque la station mobile interfère avec l'autre station mobile.
